Europäisches Patentamt

European Patent Office

Office européen des brevets

(11) Veröffentlichungsnummer: **0 090 914**

**A2**

(12) # EUROPÄISCHE PATENTANMELDUNG

(21) Anmeldenummer: **83100699.4**

(22) Anmeldetag: **23.03.83**

(51) Int. Cl.³: **G 05 D 1/08**
**B 64 G 1/24**

(30) Priorität: **03.04.82 DE 3212574**

(43) Veröffentlichungstag der Anmeldung:
**12.10.83 Patentblatt 83/41**

(84) Benannte Vertragsstaaten:
**FR GB IT NL**

(71) Anmelder: **DORNIER SYSTEM GmbH**
**Postfach 1360**
**D-7990 Friedrichshafen(DE)**

(72) Erfinder: **Bauer, Hans, Dr.-Ing.**
**Normannenweg 124**
**D-7997 Immenstaad(DE)**

(72) Erfinder: **Meier, Helmut, Dipl.-Ing.**
**Reuthenenweg 5**
**D-7997 Immenstaad(DE)**

(74) Vertreter: **Landsmann, Ralf, Dipl.-Ing.**
**Kleeweg 3**
**D-7990 Friedrichshafen 1(DE)**

(54) **Verfahren zur Lageänderung eines Satelliten.**

(57) Verfahren zur Lageänderung der Spinachse eines drallstabilisierten Satelliten mittels kurzer Pulse, wobei zwei Lagekorrekturdüsen (12, 14), die so am Satelliten (-Rotor) (10) befestigt sind, dass sie in einem körperfesten Koordinatensystem entgegengesetzte Drehmomente erzeugen, ein oder mehrere Pulspaare erzeugen, und jeweils der Puls aus der zweiten Düse (14) eine halbe Umdrehungszeit nach dem Puls aus der ersten Düse (12) gegeben wird.

FIG. 1

EP 0 090 914 A2

DORNIER SYSTEM GMBH
7990 Friedrichshafen

Reg. S 419

## Verfahren zur Lageänderung eines Satelliten

Die Erfindung betrifft ein Verfahren zur Lageänderung der Spinachse eines drallstabilisierten Satelliten. Drallstabilisierte Satelliten stabilisieren ihre Lage entweder durch die Rotation um ihre Figurenachse oder sie besitzen einen Rotor, der um seine Figurenachse rotiert.

Soll die Lage eines solchen Satelliten geändert werden, d.h. soll eine Figurenachse in einem Inertialsystem eine neue Lage einnehmen, so muss ein Drehmoment aufgebracht werden, welches die Drehimpulsachse verkippt. Nach Abbau der dabei auftretenden Nutationsbewegung stimmt die Figurenachse wieder mit der Drehimpulsachse überein.

Bekannte Satelliten besitzen eine Lageregelungsdüse am rotierenden Teil, die ein Drehmoment senkrecht zur Figurenachse aufbringen kann. Ein gegen die Umdrehungszeit kurzer Gasstoss reicht aber häufig nicht zur gewünschten Lageänderung aus. Ein Gasstoss mit der Dauer einer Umdrehung bewirkt dagegen keine resultierende Verkippung der Drehimpulsachse, da alle Momente von den eine halbe Drehung später erzeugten wieder kompensiert werden. Es werden daher mehrere kurze (z.B. 1/10 Umdrehung lange) Impulse gegeben. Die Impulse erfolgen jede Umdrehung einmal und bewirken von einem Inertialsystem aus gesehen immer eine Verkippumg um die gleiche Achse. Sie verkippen die Drehimpulsachse nach und nach bis zum gewünschten Betrag. Die Figurenachse kann wegen der Körperträgheit nicht so schnell folgen und schliesst mit der Drehimpulsachse einen Winkel ein. Daraus resultiert eine Nutationsbewegung, d.h. die Figurenachse läuft auf einem Kegelmantel um die neue Drehimpulsachse um. Diese zwangsläufig auftretende Nutation ist sehr störend, da während dieser Zeit eine definierte Ausrichtung des Satelliten bzw. seiner Antenne nicht gewährleistet ist. Eingebaute Nutationsdämpfer bringen die Nutation langsam wieder zum Verschwinden. Für die Durchführung des Manövers werden beim Stand der Technik die Lageregelungsdüsen einmal je Spinzyklus in jedem, jedem zweiten, jedem dritten usw. Spinzyklus aktiviert.

Der Erfindung liegt die Aufgabe zugrunde, ein Verfahren zur Lageänderung der Spinachse drallstabilisierter Satelliten zu schaffen, welches in möglichst kurzer Zeit eine grosse Winkeländerung bei möglichst kleiner resultierender Nutationsamplitude bewirkt.

**0090914**

Die Aufgabe wird durch das in Anspruch 1 genannte Verfahren gelöst. Vorrichtungen zur Durchführung des Verfahrens sind Gegenstände der Unteransprüche.

Die Erfindung weist folgende Vorteile auf:
- bei gleichen Düsen und gleicher Aktivierungsdauer der Düsen ist die Lageänderung in der halben Zeit durchgeführt;
- da ein wesentlich kleinerer maximaler Nutationswinkel am Ende des Manövers auftritt, ist die störende Nutationsbewegung wesentlich rascher abgebaut;
- die zweite Düse erhöht die Redundanz des Systems. Bei Ausfall einer Düse ist immer noch die zum Stand der Technik gehörende Lageregelung möglich.

Weitere Vorteile, Merkmale und Anwendungsmöglichkeiten ergeben sich aus den Figuren, die nachfolgend beschrieben werden.

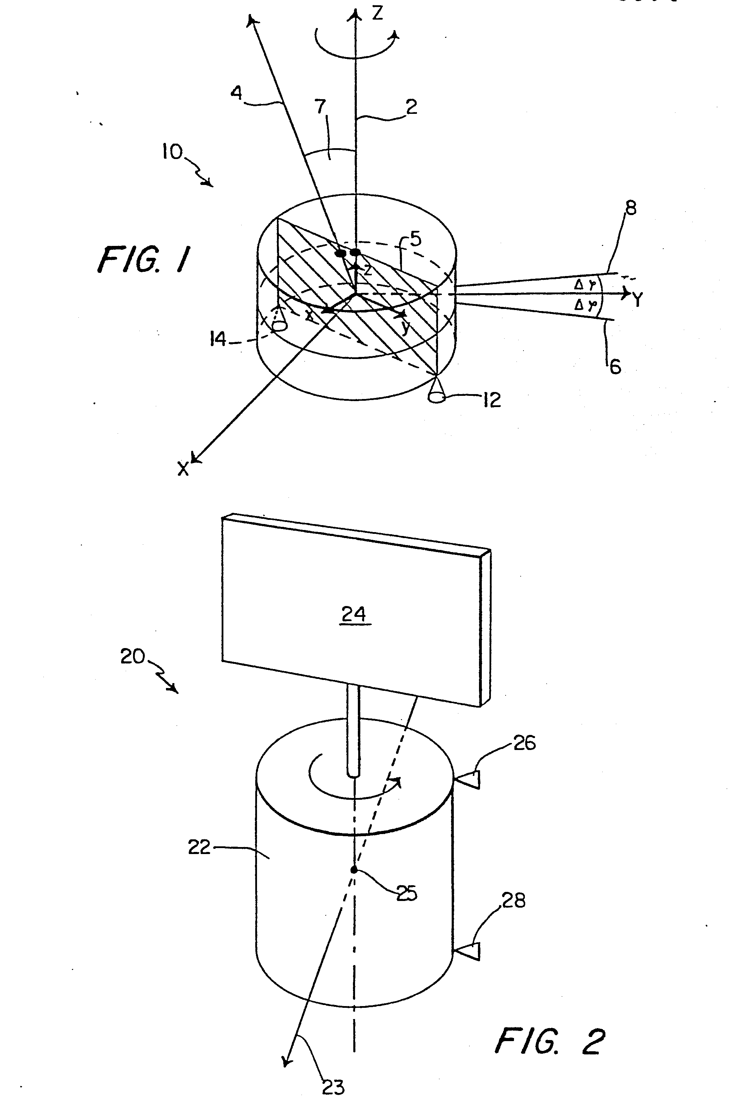

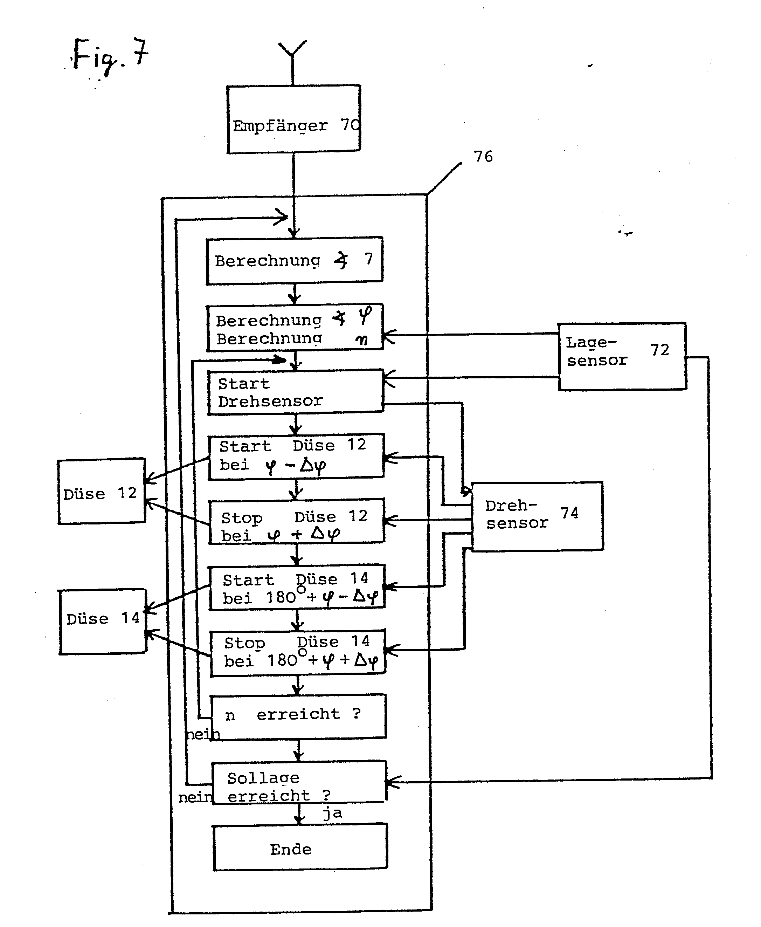

Die Fig. 1 bis 6 zeigen jeweils einen Satelliten, der zur Durchführung des erfindungsgemässen Verfahrens ausgerüstet ist. Fig. 7 zeigt eine mögliche Ausführungsform der Durchführung des erfindungsgemässen Verfahrens.

Fig. 1 zeigt den Satelliten 10 im Inertialsystem XYZ. Der Satellit rotiert, durch den Pfeil angedeutet, um die Z-Achse 2, die gleichzeitig die z-Achse des körperfesten Koordinatensystems xyz mit dem Ursprung im Schwerpunkt 1 ist. Der Satellit besitzt zwei Lageregelungsdüsen 12, 14, die in der yz-Ebene 5 (schraffiert) liegen und in z-Richtung wirken. Eine Lageänderung, z.B. die Verkippung der z-Achse. (Figurenachse) 2 auf eine neue Achse 4 - also eine Drehung um die X-Achse um den Winkel 7 - wird folgendermaßen vorgenommen:

Ein Lagesensor (hier nicht gezeigt) registriert einmal je Umdrehung die relative Lage des körperfesten Systems xyz zum inertialen System XYZ und aktiviert einen Drehsensor (nicht gezeigt). Wenn die y-Achse um einen bestimmten Winkelbetrag $\Delta\varphi$ (z.B. 20°) vor der Y-Achse steht, also auf der Linie 6 liegt, wird die Düse 12 aktiviert. Sie erzeugt ein Moment um die x-Achse. Ende der Aktivierung ist, wenn die Projektion der y-Achse auf die XY-Ebene um $\Delta\varphi$ hinter der Y-Achse auf der Linie 8 liegt. Die zweite Düse 14 wird eine halbe Umdrehung später aktiviert, also wenn die negative y-Achse über der Linie 6 steht, also $\Delta\varphi$ vor der Y-Achse liegt. Ende der Aktivierung ist wiederum, wenn die Projektion der negativen y-Achse auf die XY-Ebene um $\Delta\varphi$ hinter der Y-Achse auf der Linie 8 liegt. Dieser Ablauf wird solange wiederholt, bis die Achse 2 auf der Achse 4 liegt. Die Pulspaare können sowohl jeden Spinzyklus gegeben werden als auch jeden zweiten, dritten usw. Stets werden jedoch bei einer Umdrehung beide Düsen (um 180° versetzt) betätigt. So wird die Nutation der z-Achse um die neue Drehimpulsachse 4 auf einem wesentlich kleineren Betrag gehalten als bei einmaliger Pulserzeugung je Spinzyklus.

Fig. 2 zeigt eine weitere Ausführungsform eines Satelliten 20, der aus einem Rotor 22 und einer in einem Inertialsystem feststehenden Antennenplattform 24 besteht. Zur Durchführung des erfindungsgemässen Verfahrens ist der Rotor 22 mit zwei Düsen 26, 28 ausgestattet, die hier nicht axial wie in Fig. 1 sondern radial montiert sind. Eine erfindungsgemässe Aktivierung der beiden Düsen 26, 28 erzeugt im körperfesten System xyz entgegengesetzte Drehmomente um eine Drehachse 23, die durch Schwerpunkt 25 geht. Im Inertialsystem bewirkt die erfindungsgemässe Aktivierung gleichsinnige Drehmomente, also eine Verkippung um die Achse 23.

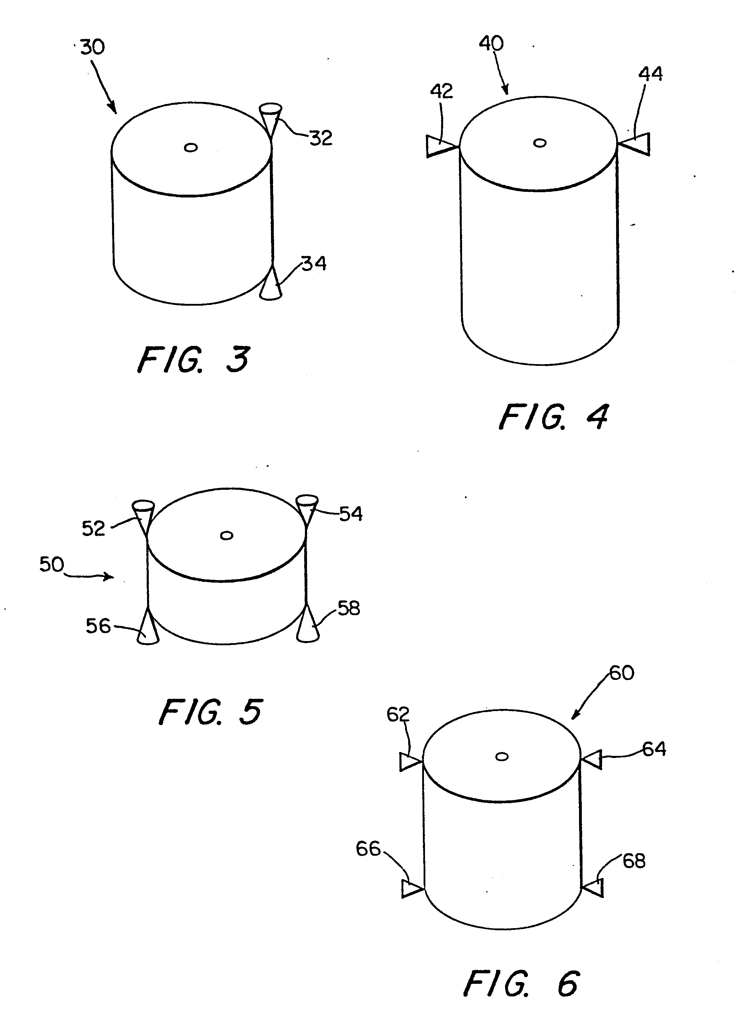

Fig. 3 zeigt eine weitere Möglichkeit der Anbringung der Lageregelungsdüsen eines Satelliten 30. Die Düsen 32, 34 sind hier axial und antiparallel montiert. Sie erzeugen in einem körperfesten System entgegengesetzte Drehmomente. Bei erfindungsgemässem Pulsbetrieb mit zwei Pulsen pro Spin, die je eine halbe Umdrehung nacheinander erfolgen, erfolgt ebenfalls die gewünschte Lageänderung der Spinachse.

Fig. 4 zeigt als weitere Ausführungsform den Satelliten 40 mit zwei radial und antiparallel ausgerichteten Lageregelungsdüsen 42, 44. Bei der Durchführung der erfindungsgemässen Verfahren tritt bei den Satelliten 10, 20, 30, 40 neben dem Drehmoment eine gewisse Schwerpunktsverschiebung auf. Diese ist jedoch im allgemeinen vernachlässigbar. Für spezielle Missionen, bei denen diese kleine Schwerpunktsverschiebung nicht vernachlässigt werden darf, werden die folgenden Ausführungsformen vorgeschlagen.

Fig. 5 zeigt als weitere Ausführungsform den Satelliten 50 mit vier axialen Düsen 52, 54, 56, 58. Eine erfindungsgemässe Verkippung erfolgt durch kurze Aktivierung der nicht benachbarten Düsen 52, 58 und eine halbe Umdrehung folgende kurzzeitige Aktivierung der Düsen 54, 56 für den zweiten Puls in einem oder mehreren Spinzyklen.

Fig. 6 zeigt den Satelliten 60 mit den hier radial ausgerichteten Düsen 62, 64, 66, 68. Hier erzeugen die Düsen 62 und 68 den jeweils ersten Puls, die Düsen 64, 66 den jeweils zweiten Puls jedes Pulspaares.

Durch den Momentenausgleich tritt, ebenso wie in Fig. 5, keine Bahnbeeinflussung durch eine Translationsbewegung auf.

Fig. 7 zeigt den Aufbau einer Ausführungsform zur Durchführung des erfindungsgemässen Verfahrens im Satelliten 10; nämlich einen Empfänger 70, einen Lagesensor 72, einen Drehsensor 74 und einen Rechner 76.

Der Empfänger 70 erhält von der Bodenstation (nicht gezeigt) das Kommando zur Durchführung einer Lageänderung um einen bestimmten Winkel oder eine neue Sollage 4 der Figurenachse 2. Der Lagesensor 72 liefert in jedem Spinzyklus Sensordaten für die Bestimmung der Lage des körperfesten Koordinatensystems xyz im inertialen Koordinatensystem XYZ. Je nach Aufgabe ist er als Erdsensor oder Sonnensensor ausgebildet oder auf den Fixsternhimmel eingestellt.

Der Drehsensor 74 registriert die Drehung um die z-Achse, er besteht z.B. aus einem bekannten Ringlaser, Geschwindigkeitskreisel oder einer Elektronik, die aus den Lagesensordaten eines Referenzobjektes (Sonne, Erde, Fixsterne) die für eine vollständige Drehung der Spinachse benötigte Zeit bestimmt und als Schätzwert für die nächste Umdrehung verwendet. Die Drehmessung wird damit auf eine Zeitmessung zurückgeführt. Der Drehsensor 74 wird in jeden Spinzyklus durch den Rechner 76 in Abhängigkeit von Lagesensordaten aktiviert.

Der Rechner 76 arbeitet in folgenden Schritten:

a) Ist die vom Empfänger 70 erhaltene Information die neue Sollage der Figurenachse, so berechnet der Rechner den Drehwinkel 7, der notwendig ist, um diese Sollage zu erreichen.

b) Aus der Lage im Raum, die er vom Lagesensor 72 erhält, und dem Drehwinkel, der unter Punkt a) berechnet wurde oder der vom Empfänger 70 stammt, wird der Pulswinkel $\varphi$

berechnet. Dabei ist $\varphi$ der mittlere Schubwinkel. In
Fig. 1 ist $\varphi$ der Winkel zwischen der y-Achse und der
X-Achse. Die Aktivierung beginnt $\Delta\varphi$ vorher und endet
$\Delta\varphi$ hinter der y-Achse. $\Delta\varphi$ wurde off-line vorprogrammiert und ist im Rechner 76 gespeichert.

c) Berechnung der Zahl der Pulspaare n. Sie ist dem Verschiebungswinkel 7 proportional.

d) In Abhängigkeit von den Lagesensordaten wird der Drehsensor aktiviert.

e) Der Rechner wartet, bis die Lage $\varphi-\Delta\varphi$ erreicht ist,
und aktiviert dann die erste Düse 12.

f) Bei $\varphi + \Delta\varphi$ ist Ende der Aktivierung für die erste
Düse 12.

g) Bei $\varphi + 180^{\circ} - \Delta\varphi$ (vom Drehsensor ermittelt) wird die
zweite Düse 14 aktiviert.

h) Bei $\varphi + 180^{\circ} + \Delta\varphi$ ist Ende der Aktivierung der
zweiten Düse 14.

i) Der Rechner trifft die Entscheidung, ob alle n Pulspaare schon durchgeführt wurden. Falls nein, wird der
Zyklus mit dem Schritt d weitergeführt.

k) Der Rechner überprüft unter Verwendung von Lagesensorinformationen, ob nach den n Pulspaaren die Istlage
mit der Sollage übereinstimmt. Falls ja, ist das Manöver
beendet, falls nein, wird ein neuer Drehwinkel 7 berechnet (im Programm Punkt a).

21. Jan. 1983
Ka/Ht.

DORNIER SYSTEM GMBH
7990 Friedrichshafen

0090914

Reg. S 419

Patentansprüche

1. Verfahren zur Lageänderung der Spinachse eines drallstabilisierten Satelliten mittels kurzer Pulse, dadurch
gekennzeichnet, dass zwei Lagekorrekturdüsen (12, 14),
die so am Satelliten(-Rotor) (10) befestigt sind, dass
sie in einem körperfesten Koordinatensystem entgegengesetzte Drehmomente erzeugen, ein oder mehrere Pulspaare erzeugen, wobei jeweils der Puls aus der zweiten
Düse (14) eine halbe Umdrehungszeit nach dem Puls aus
der ersten Düse (12) gegeben wird.

2. Vorrichtung zur Durchführung des Verfahrens gemäss
Anspruch 1, dadurch gekennzeichnet, dass die beiden
Düsen axial, d.h. parallel zur Figurenachse und
parallel (12, 14) oder antiparallel (32, 34) zueinander
ausgerichtet sind.

3. Vorrichtung zur Durchführung des Verfahrens gemäss
Anspruch 1, dadurch gekennzeichnet, dass die beiden
Düsen radial zur Figurenachse und parallel (26, 28)
oder antiparallel (42, 44) zueinander ausgerichtet sind.

**0090914**

4. Vorrichtung zur Durchführung des Verfahrens gemäss Anspruch 1, dadurch gekennzeichnet, dass vier Düsen entweder radial (62, 64, 66, 68) oder axial (52, 54, 56, 58) am Satellitenrotor (50, 60) so befestigt sind, dass je zwei benachbarte Düsen im körperfesten Koordinatensystem entgegengesetzte Drehmomente erzeugen und die jeweils zwei nicht benachbarten Düsen gemeinsam einen Puls des Pulspaares erzeugen.

21. Jan. 1983
Ka/Ht.

FIG. 1

FIG. 2

0090914

FIG. 3

FIG. 4

FIG. 5

FIG. 6

Fig. 7

```
                        Y
                        |
            ┌───────────┴───────────┐
            │    Empfänger 70        │
            └───────────┬───────────┘
                        │                        76
    ┌───────────────────┼────────────────────────┐
    │    ┌──────────────┴──────────────┐          │
    │    │    Berechnung  ϑ  7          │          │
    │    └──────────────┬──────────────┘          │
    │    ┌──────────────┴──────────────┐          │      ┌──────────────┐
    │    │    Berechnung  ϑ  φ          │◄─────────┼──────│  Lage-    72 │
    │    │    Berechnung     n          │◄──┐      │      │  sensor      │
    │    └──────────────┬──────────────┘   │      │      └──────────────┘
    │    ┌──────────────┴──────────────┐   │      │
    │    │    Start                     │◄──┤      │
    │    │    Drehsensor                │   │      │
    │    └──────────────┬──────────────┘   │      │
    │    ┌──────────────┴──────────────┐   │      │
┌───┤    │  Start   Düse 12             │◄──┤      │
│Düse│   │  bei  φ - Δφ                 │   │      │
│ 12 │   └──────────────┬──────────────┘   │      │      ┌──────────────┐
└───┤    ┌──────────────┴──────────────┐   │      │      │  Dreh-    74 │
    │    │  Stop    Düse 12             │◄──┼──────┼──────│  sensor      │
    │    │  bei  φ + Δφ                 │   │      │      └──────────────┘
    │    └──────────────┬──────────────┘   │      │
    │    ┌──────────────┴──────────────┐   │      │
┌───┤    │  Start   Düse 14             │◄──┘      │
│Düse│   │  bei 180°+ φ - Δφ            │          │
│ 14 │   └──────────────┬──────────────┘          │
└───┤    ┌──────────────┴──────────────┐          │
    │    │  Stop    Düse 14             │◄─────────┘
    │    │  bei 180°+ φ + Δφ            │
    │    └──────────────┬──────────────┘
    │    ┌──────────────┴──────────────┐
    │    │    n  erreicht ?             │
    │    └──────────────┬──────────────┘
    │ nein              │
    │    ┌──────────────┴──────────────┐
    │    │    Sollage                   │◄─────────
    └────│    erreicht ?                │
    nein └──────────────┬──────────────┘
                        │ ja
            ┌───────────┴───────────┐
            │         Ende          │
            └───────────────────────┘
```